# EUROPEAN PATENT SPECIFICATION

(11) **EP 0 436 764 B1**
(45) Date of publication and mention of the grant of the patent: **14.12.1994**
(21) Application number: 90100630.4
(22) Date of filing: 12.01.1990
(51) Int. Cl.: A43B 17/00, B29C 67/14

(54) **Shoe insole**
Einlegesohle für Schuhe
Semelle interne de chaussure

(43) Date of publication of application: 17.07.1991
(73) Proprietor: NIHONKENKOZOSHINKENKYUKAI CO. LTD., Fukuoka-shi Fukuoka 813 (JP)
(72) Inventor: Masuda, Isamu, Fukuoka-shi, Fukuoka 814-01 (JP)
(74) Representative: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)

(56) References cited:
- EP-A- 0 289 600
- US-A- 2 812 570

## Description

The present invention relates to an inner sole used for inserting into shoes, more specifically, it relates to the shoe insole as a health instrument for promoting health by applying a line of magnetic force and a biasing stimulus to the sole of a foot.

### BACKGROUND OF THE ART

A shoe insole of the abovementioned kind is known from EP-A-0 289 600.

Conventionally, as such a shoe insole, as shown in Fig. 9, a rubber sheet 22 having a plurality of projections 21 has been fixed to the plantar arch of a leather insole body 20.The rubber sheet 22 is formed by laying permanent magnet grains in each projection 21, and its periphery is inserted into a groove 23 provided in the insole body 20 so as to be fixed integrally.

However, in the case of such insole, since the magnetized portion is present only partly in the insole body 20, a line of magnetic force can not be applied entirely throughout the sole, thus it is difficult to obtain the effective magnetic treatment sufficiently. Also, since the rubber sheet 22 is not strong physically, when the bending stress or the like has occurred in use, considerable difficulty was encountered in durability such as becoming unusable by cracks and tears produced on the rubber sheet 22.

In order to solve these problems, the inventor has developed to construct the insole by pressing and magnetizing a mixture of rubber and magnetic powder, and laying a reinforcing sheet material within the center of the insole body. According to the construction, the line of magnetic force can be applied entirely throughout the sole, besides tears of the insole due to the bending stress can be prevented, thus improving the durability thereof.

However, in such improvement as mentioned above, though the reinforcing sheet material functions effectively to prevent the tears and cracks of the insole, cracks occurred on its surfaces can be hardly prevented and a sufficient physical strength is difficult to be hoped. Besides, when the projections are formed integrally on the surfaces of the insole, cracks occurred on the base portion of the projection will cause it to come off, consequently the treatment effect by the biasing stimulus will be reduced considerably.

Then, the EP-A-0 289 600 proposed to construct the insole by embedding two reinforced material sheets within and along the insole body surfaces. This design can prevent both the surfaces of the insole body from cracking and improve the physical strength thereof and further prevent the projection from coming off caused by cracks on the base portion of the projection.

However, it is not easy to embed each of the reinforced material sheets in a suitable position within and along the insole body surface when manufacturing the insole of this type, and therefore it is difficult to obtain the effect with the EP-A-0 289 600 as expected.

US-A-2 812 570 describes an article of manufacture comprising a contoured web woven of loosely interwoven metal wires as weft and warp components, hoses made of absorbent fibers each forming a covering for at least one of the web components running in one direction and a hardened coat substantially filling the interstices of the web, a comparatively heavy layer of hardened material covering one side of the filled web and at least one coat of hardened material applied to the opposite side of the filled web in conformity with the contours of the same to embed the web between the coats. The coats and the layer are of a composition capable of being resoftened in a common volatile solvent. However, according to the US-A-2 812 570 the sheet material must be easily pliable but not elastic. Therefore in the US-A-2 812 570 a web is used which has formable and formpreserving material extending in both directions as well as non-formable material also extending in both directions. Due to this construction it is not feasible to embed this web into the inside of the projections by applying pressure to a mixture of rubber and magnetic powder.

It is therefore an object of the present invention to provide a shoe insole which has superior strength and prevent impair of the products quality by using a reinforced material sheet which has a structure easily embedded in the insole body in an optimum state.

### DISCLOSURE OF THE INVENTION

A shoe insole according to the present invention comprises an insole body which is formed by pressing and magnetizing a mixture of rubber and magnetic powder and provided with projections formed integrally or at least one surface of the insole body and further provided with reinforced material sheets embedded within and along the insole body surfaces. Said reinforced material sheet is orthogonally woven of two thread materials in meshes, one of which has an isodiametric form that has a nearly equal diameter in the directions perpendicular to and parallel to the material sheet, while the other of which thread materials has a flat from that has a sufficiently larger diameter in the direction parallel to the material sheet than that in the direction perpendicular to the material sheet.

According to the present invention, when placing the rubber-and-magnet plate in the middle of the insole body and two reinforced material sheets are together pressed and formed in a predetermined mold, the flat form thread material becomes moderate resistance against intrusion of the reinforced material sheet into the rubber-and-magnet plate, thus in the projections, the reinforced material sheet is moderately intruded into the projection and embedded there. Thus, each reinforced material sheet does not extrude outside the body and reinforces the projection. Further, because of a large contact area between the flat form thread material and the rubber-and-magnet plate, bonding strength between both becomes large.

### BRIEF DESCRIPTION OF THE DRAWINGS

Fig. 1 is a plan view showing a shoe insole according to one embodiment of the present invention,
Fig. 2 is a vertical sectional view of a shoe insole taken along the line A-A of fig 1,
Fig. 3 is an enlarged sectional view showing the projected portion of an insole body,
Fig. 4 is an enlarged illustrative view showing a woven state of the reinforced material sheet.
Fig. 5 is a section view of the reinforced material sheet taken along line B-B of Fig. 4.
Fig. 6 is a section view of the reinforced material sheet taken along line C-C of Fig. 4.
Fig. 7 is an illustrative view showing manufacturing processes of a shoe insole.
Fig. 8 is a perspective view showing a manufacturing method of a shoe insole.
Fig. 9 is a plan view showing a conventional shoe insole.

### BEST MODE FOR CARRYING OUT THE INVENTION

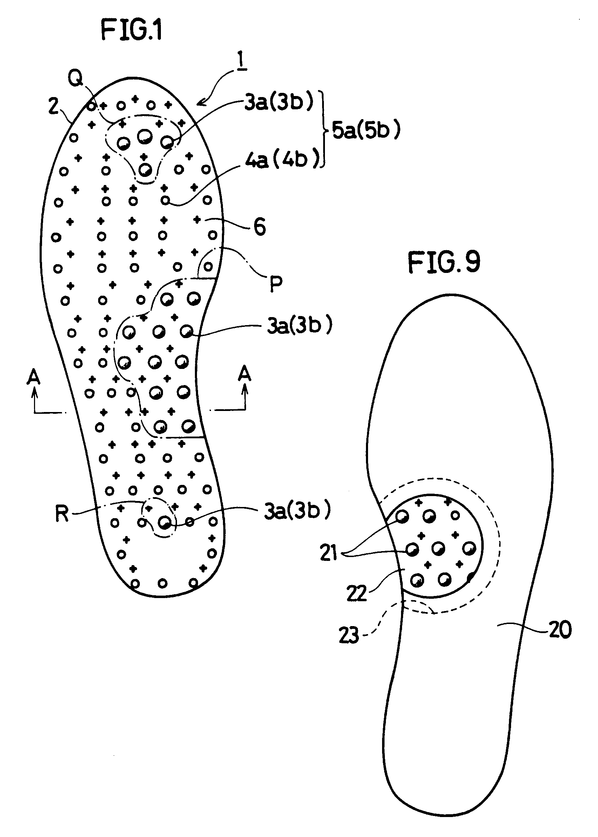

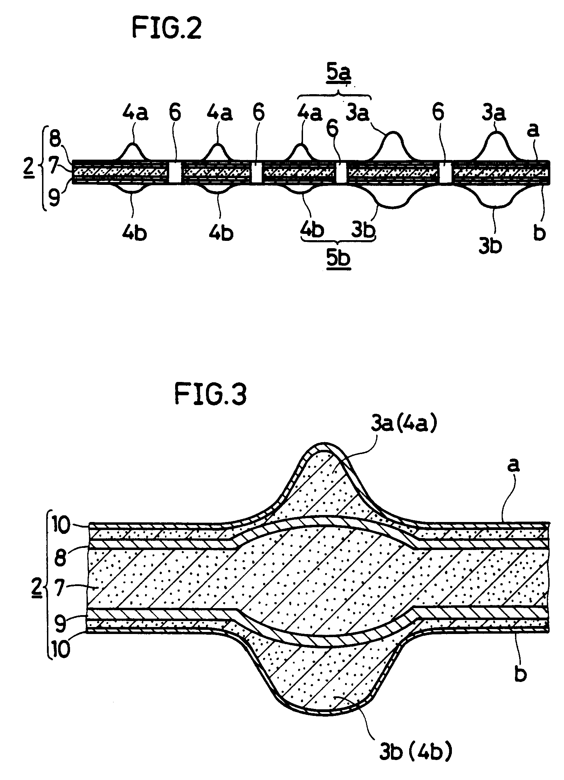

Figs. 1 and 2 show a shoe insole 1 according to one embodiment of the present invention, in which Fig. 1 shows an external view of the embodiment and Fig. 2 shows an internal structure thereof.

In the shoe insole 1 shown in the drawing, a group of projections 5a, 5b which include large projections 3a, 3b and small projections 4a, 4b, are formed integrally on both surfaces (hereinafter, for convenience' sake, the surface is indicated by a and the reverse side is indicated by b of the thin liner body 2 having a shape of the sole of a foot, and a plurality of air holes 6 (shown in + in Fig. 1) are formed through the entire surface of the insole body 2.

A group of projections 5a, 5b on each surface are selectively used at user's option and when the insole 1 is inserted into the shoes, the projections on one side touch the sole of a foot to function for treatment, and those on the other side touch the sole of a shoe to form air paths between the insole body 2. In order to apply various different biasing stimuli to the human body, the large and small projections 3a and 4a of projection group 5a are formed into the sharp cone-shaped tips, and the large projections 3b and small projections 4b of the other projection group 5b are formed into the flat and round cone-shaped tips. The large projections 3a, 3b among each projection are arranged respectively in a large number at the plantar arch P, 4 at the finger joints Q and 1 at the heel R, and the small projections 4a, 4b are arranged entirely on the other portions uniformly.

The insole body 2 aforementioned is, as shown in Fig. 3, constructed as such that two sheets of flexible reinforcing material 8, 9 are laid within a rubber magnet plate 7, whose entire surfaces are formed with a protective coat 10 with a polyurethane coating and the like.

The rubber magnet plate 7 mentioned above is formed of a mixture of synthetic rubber such as NBR rubber (nitrobutadiene rubber) and a magnetic powder such as ferrite as a main raw material, and N-pole and S-pole are magnetized respectively on the a side and b side, flux density of about 400 to 600 gauss is given at each projection.

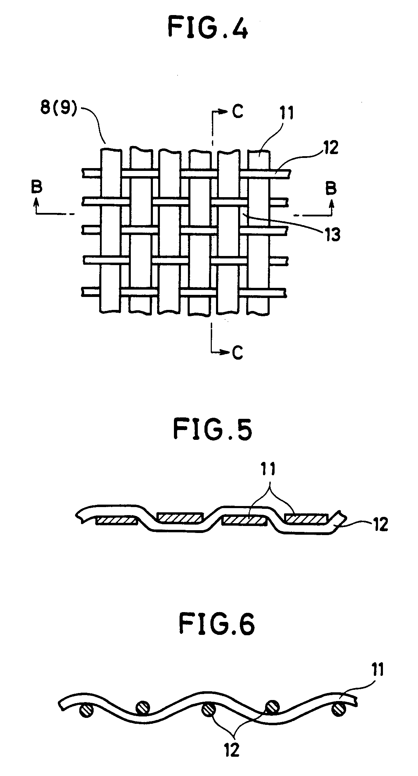

Each reinforced material sheet 8, 9 has an adaptable shape to the shape of the insole body 2, and in this embodiment, as shown in Fig. 4, fabric is used which is alternately up and down woven of a warp 11 and a woof 12 in meshes, each of which is made of nylon fiber. For these warp 11 and woof 12, 420 denier thread, for example, is used, and as shown in Fig. 6, woof 12 has an isodiametric form that has a nearly equal diameter in both the directions perpendicular to and parallel to the material sheet, and as shown in Fig. 5 warp 11 has a flat form that has a sufficiently larger diameter in the direction parallel to the material sheet than that in the direction perpendicular to the material sheet. The form of warp 11 is easily obtained from pressing the thread material used for woof 12 in a heating condition.

A reinforced material sheet 8 or 9 is made in such an waving manner that warps 11 and woofs 12 are orthogonally crossed, and in this embodiment, the fabric is woven with thread density which contains forty-six warps 11 and forty-four woofs 12 in a rectangular area of five cm x five cm, and has meshes 13 of suitable size between crosses.

One reinforcing sheet material 8 is positioned along the vicinity of the surface a and the other reinforcing sheet material 9 is positioned along the vicinity of the reverse side b of the insole body 2, and each one is moderately projected into the thick portion of the projection at each position of the large projections 3a, 3b and the small projections 4a, 4b.

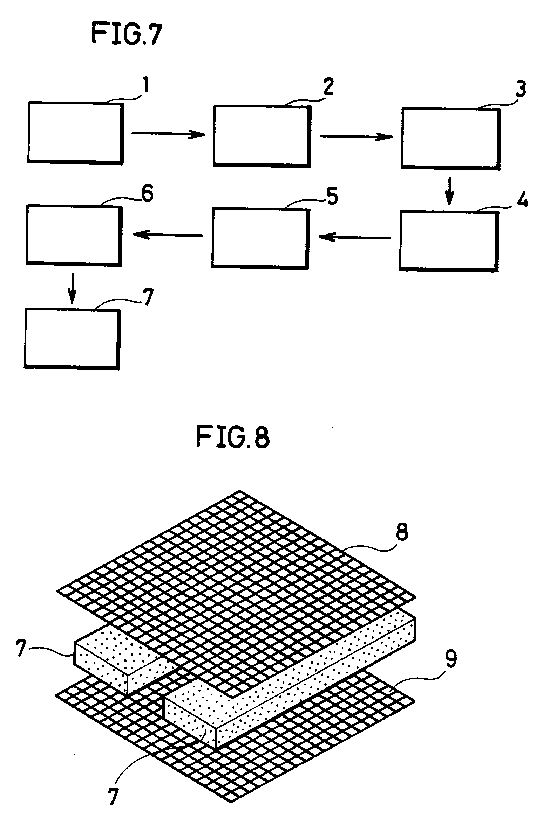

Fig. 7 specifically shows a method of manufacturing the aforementioned insole body 2.

The first process 1 is for preparing raw materials of the rubber magnet plate 7, whereby synthetic rubber such as NBR rubber and a ferrite powder are mixed at the rate of 1 : 15 by weight, and the mixture is added with a cross-linking agent, zinc oxide, sulphur, curing agent, softener (e.g. DOP - dioctyl phthalate), etc, and kneaded.

The following process 2 is for forming the rubber magnet plate 7, whereby the raw materials prepared are compressed by a roller and formed into a plate having uniform thickness, then cut into the prescribed size.

In the next process 3, as shown in Fig. 8, the two sheets of reinforcing material 8, 9 are positioned to face each other as clamping the rubber magnet plates 7, 7, which are all pressed together with a hot plate mold for a fixed time while heated. The temperature at this time is, for example, around 135°C and the pressing time is 3 to 4 minutes. In the heating and pressing process, the projections 5a, 5b are formed on the both surfaces and the each reinforcing sheet material 8, 9 is laid in the vicinity of the both surfaces within the rubber magnet plate 7. Besides, at each position of the large projections 3a, 3b and the small projections 4a, 4b, each reinforcing sheet material 8, 9 enters into the thick portion of the projection and functions effectively to reinforce the projection. In this case, the flat form warp 11 becomes moderate resistance against intrusion of the reinforced material sheets 8, 9 into the rubber-and-magnet plate 7, therefore in the projections, reinforced material sheets 8, 9 are moderately intruded into the projections and do not extrude outside the body. Thus, in each of large projections 3a, 3b or small projections 4a, 4b, each of reinforced material sheets 8, 9 functions effectively to reinforce projections. Moreover, the contact area between warp 11 and rubber-and-magnet plate 7 is large, thus bonding strength between both becomes great.

Further, in the case of this embodiment, a weaving the thread material of nylon fiber consisting of polycapramide (structural formula: [NH(CH₂)₅CO]ₙ ) and treated with an adhesion treating agent comprising a mixture of condensation polymer of resorcinol - formaldehyde, copolymer of butadiene - styrene·vinyl - pyridine and copolymer of butadiene·styrene is used as the reinforcing sheet material 8, 9, and when it is heated and pressed together with the rubber magnet plate 7, the adhesion treating agent is fused to have the reinforced material sheet 8, 9 bonded with the rubber magnet plate 7 rigidly in one body.

In the following process 4, extracting the formed body and drilling the air holes 6 therein are conducted simultaneously to complete the external shape of the insole body 2, which is, in the process 5, coated with an elastic polyurethane 2 liquid resin coating entirely on both surfaces, thereby forming the protective coat 10 having a superb wear-resistance.

In the next process 6, the entire insole body 2 is treated for magnetization, whereby N-pole is magnetized on the surface a and S-pole is magnetized on the reverse side b. In the case of this embodiment, by the magnetization in the process the flux density of 550 gauss is given to the large projections 3a, 3b, 400 gauss is given to the small projections 4a, 4b and 180 gauss is given to the other plane portions.

In the last process 7, other treatments are conducted to complete the product.

In the embodiment mentioned hereinbefore, though 2 sheets of reinforcing material 8, 9 are laid at the prescribed positions within the rubber magnet plate 7, it will be appreciated that an additional reinforcing sheet material may be inserted, for example, between the reinforcing sheet materials 8, 9 when necessary.

### INDUSTRIAL APPLICABILITY

In using the shoe insole 1, when it is inserted into the shoe with the reverse side b being faced with a sole of the shoe, since the air paths are formed between the sole of the shoe and the insole 1 by a group of projections 5b, in cooperation with the air holes 6, evaporation of sweating is accelerated, functioning effectively to prevent the stuffiness. When laying a foot on the insole 1, the group of projections 5a on the surface side a contact the sole of the foot and a strong biasing stimulus is applied entirely on the sole by each of large and small projections 3a, 4a, and at the same time, a line of magnetic force from the rubber magnet plate 7 functions effectively. When an excessive biasing force is applied, the insole 1 can be reversed to select the slighter one by the projection group 5b on the reverse side b.

When the bending stress occurs on the insole 1 while wearing of taking off shoes or walking, since two sheets of reinforcing material 8, 9 are laid within the insole body 2, the cracks and tears of which due to the bending stress may be prevented completely.

Besides, since the two sheets of reinforcing material 8, 9 are positioned along the surface side a and reverse side b of the insole body 2, and in addition, each of the reinforcing sheet material 8, 9 is bonded rigidly with the rubber magnet plate 7 by the bonding force of an adhesion treating agent, cracks occurred on both surfaces of the insole body 2 can be also prevented completely.

In particular, since the cracks can hardly occur at the base portions of the large projections 3a, 3b and the small projections 4a, 4b, which are prevented from coming off in use besides, since each reinforcing sheet material 8, 9 is moderately inserted into the thick portion of each projection, preventive function against the falling of projections may be greatly accelerated. Furthermore, the both surfaces of the insole body 2 are coated entirely with the protective coat 10, so that a high wear-resistance with the physical strength which is sufficiently endurable to ordinary use can be obtained.

## Claims

1. A shoe insole comprising
an insole body (2) formed by pressing and magnetizing a mixture of rubber and magnetic powder, projections (3a, 3b; 4a, 4b) formed integrally on at least one face (a, b) of the insole body (2) and reinforced material sheets (8, 9) made of nylon fibers and embedded within and along both faces of the insole body (2), said reinforced material sheet (8, 9) at the parts corresponding to the projections projecting moderately into the inside of the projections
characterized in that
the reinforced material sheet (8, 9) is orthogonally woven in meshes comprising two thread materials (11, 12) made of nylon fiber, one thread material (12) having an isodiametric form that has a nearly equal diameter in the directions perpendicular to and parallel to the material sheet, and the other thread material (11) having a flat form that has a larger diameter in the direction parallel to the material sheet than that in the direction perpendicular to the material sheet.

2. A shoe insole as claimed in claim 1, wherein said rubber and magnetic powder are NBR rubber and a ferrite powder, which are mixed together in the prescribed portion and added with an additive containing a softener to form a raw material of an insole body (2).

3. A shoe insole as claimed in claim 1, wherein entirely on both surfaces of said insole body (2), a protective coat (10) is formed by a polyurethane coating.

4. A shoe insole as claimed in claim 1 or claim 3, wherein a plurality of air holes (6) are formed entirely through said insole body (2).

5. A shoe insole as claimed in claim 1, wherein said projections are formed on both faces (a, b) of the insole body (2).

6. A shoe insole as claimed in claim 1 or claim 5, wherein said projections include large projections (3a, 3b) and small projections (4a, 4b), the former are projected at the plantar arch (P), finger joints (Q) and the heel (R) and the latter are projected entirely on the other portions.

7. A shoe insole as claimed in claim 1, wherein said each reinforced material sheet (8, 9) comprises a fabric woven of nylon fiber thread material treated with an adhesion treating agent, which is fused and bonded together with an insole in one body.

## Patentansprüche

1. Eine Schuheinlegesohle mit
einem Einlegesohlenkörper (2), der gebildet ist, indem eine Mischung aus Gummi und Magnetpulver gepreßt und magnetisiert ist,
Vorsprüngen (3a, 3b; 4a, 4b), die einstückig auf zumindest einer Fläche (a, b) des Einlegesohlenkörpers (2) gebildet sind und
Verstärkungsmaterialblättern (8, 9), die aus Nylonfasern hergestellt sind und innerhalb und längs beider Flächen des Einlegesohlenkörpers (2) eingebettet sind, wobei das Verstärkungsmaterialblatt (8, 9) an den Teilen, die den Vorsprüngen entsprechen, moderat in die Innenseite der Vorsprünge vorsteht,
dadurch gekennzeichnet, daß
das Verstärkungsmaterialblatt (8, 9) orthogonal in Maschen gewebt ist, mit zwei Fadenmaterialien (11, 12), die aus Nylonfaser hergestellt sind, wobei ein Fadenmaterial (12) eine Isodurchmesserform aufweist, die einen nahezu gleichen Durchmesser in den Richtungen senkrecht zu und parallel zu dem Materialblatt aufweist, und das andere Fadenmaterial (11) eine flache Form aufweist, die einen größeren Durchmesser in der Richtung parallel zu dem Materialblatt als jenen in der Richtung senkrecht zu dem Materialblatt aufweist.

2. Eine Schuheinlegesohle nach Anspruch 1, worin das Gummi- und Magnetpulver NBR-Gummi und ein Ferritpulver sind, welche in dem vorgeschriebenen Anteil zusammengemischt sind und mit einem Additiv versetzt sind, das einen Weichmacher enthält, um ein Rohmaterial eines Einlegesohlenkörpers (2) zu bilden.

3. Eine Schuheinlegesohle nach Anspruch 1, worin auf beiden Oberflächen des Einlegesohlenkörpers (2) eine Schutzschicht (10) durch einen Polyurethanüberzug vollständig hindurch gebildet ist.

4. Eine Schuheinlegesohle nach Anspruch 1 oder 3, worin eine Vielzahl von Luftlöchern (6) vollständig durch den Einlegesohlenkörper (2) gebildet ist.

5. Eine Schuheinlegesohle nach Anspruch 1, worin Vorsprünge auf beiden Flächen (a, b) des Einlegesohlenkörpers (2) gebildet sind.

6. Eine Schuheinlegesohle nach Anspruch 1 oder Anspruch 5, worin die Vorsprünge große Vorsprünge (3a, 3b) und kleine Vorsprünge (4a, 4b) umfassen, worin die ersteren an dem Plantarbogen (P), den Fingergelenken (Q) und der Ferse (R) vorstehen und die letzteren vollständig an den anderen Teilen vorstehen.

7. Eine Schuheinlegesohle nach Anspruch 1, worin jedes verstärkte Materialblatt (8, 9) ein aus Nylonfaserfadenmaterial gewebtes Gewebe umfaßt, das mit einem Adhäsionsbehandlungsmittel behandelt ist, welches mit einer Einlegesohle zu einem Körper verschmolzen und geklebt ist.

## Revendications

1. Semelle intérieure pour chaussure, comprenant
- un corps de semelle (2) formé en pressant et en aimantant un mélange de caoutchouc et de poudre magnétique, des saillies (3a, 3b ; 4a, 4b) formées de façon intégrée sur au moins une face (a, b) du corps de semelle (2) et des feuilles de matériau de renfort (8, 9) réalisées en fibre de nylon et novées à l'intérieur et le long des deux faces du corps (2) de la semelle, au niveau des parties qui correspondent aux projections lesdites feuilles de matériau renforcé (8, 9) se projetant modérément vers l'intérieur des projections, caractérisée en ce que
- la feuille de matériau renforcé (8, 9) est tissée suivant un réseau orthogonal, qui comprend deux matériaux en fil (11, 12), un matériau en fil (12) étant réalisé avec des fibres de nylon ayant une forme isodiamétrale qui présente un diamètre pratiquement égal dans les directions perpendiculaire et parallèle à la feuille de matériau, et l'autre matériau en fil (11) ayant une forme plane qui présente un diamètre plus important dans la direction parallèle à la feuille de matériau que dans la direction perpendiculaire à la feuille de matériau.

2. Semelle intérieure de chaussure selon la revendication 1, dans laquelle ledit caoutchouc et ladite poudre magnétique sont un caoutchouc au nitrobutadiène (NBR) et une poudre de ferrite, qui sont mélangés ensemble dans la proportion prescrite et auxquels on ajoute un additif qui contient un assouplissant afin de former une matière de départ pour un corps de semelle (2).

3. Semelle intérieure de chaussure selon la revendication 1, dans laquelle un revêtement protecteur (10) est formé par un revêtement de polyuréthane entièrement sur les deux surfaces dudit corps (2) de semelle.

4. Semelle intérieure de chaussure selon l'une ou l'autre des revendications 1 et 3, dans laquelle une pluralité de trous à air (6) sont formés entièrement à travers ledit corps (2) de semelle.

5. Semelle intérieure de chaussure selon la revendication 1, dans laquelle des saillies sont formées sur les deux surfaces (a, b) du corps (2) de la semelle.

6. Semelle intérieure de chaussure selon l'une ou l'autre des revendications 1 et 5, dans laquelle lesdites saillies comprennent des saillies de grande taille (3a, 3b) et des saillies de petite taille (4a, 4b), les premières faisant saillie au niveau de la voûte plantaire (P), des articulations des orteils (Q), et du talon (R), et ces dernières faisant saillie entièrement sur les autres parties.

7. Semelle intérieure de chaussure selon la revendication 1, dans laquelle chacune desdites feuilles en matériau de renfort (8, 9) comprend un tissu de fil de fibres de nylon, traité avec un agent de traitement adhésif, qui est fondu et collé ensemble avec une semelle pour former un corps.
